# EUROPÄISCHE PATENTSCHRIFT

(11) **EP 0 627 549 B1**
(45) Veröffentlichungstag und Bekanntmachung des Hinweises auf die Patenterteilung: **21.08.1996**
(21) Anmeldenummer: 94810327.0
(22) Anmeldetag: 02.06.1994
(51) Int. Cl.: F01N 3/28

(54) **Katalysator für die katalytische Behandlung von Abgas**
Catalytic converter for exhaust gases catalytic treatment
Catalyseur pour le traitement catalytique des gaz d'échappement

(30) Priorität: 04.06.1993 CH 1678/93
(43) Veröffentlichungstag der Anmeldung: 07.12.1994
(73) Patentinhaber: SCAMBIA INDUSTRIAL DEVELOPMENTS AKTIENGESELLSCHAFT, FL-9494 Schaan (LI)
(72) Erfinder: Steenackers, Pieter Delfina, Dr., B-3030 Heverlee (BE)
(74) Vertreter: Eder, Carl E.

(56) Entgegenhaltungen:
- EP-A- 0 514 326
- DE-A- 2 201 881
- DE-A- 2 905 241
- GB-A- 2 128 893
- US-A- 3 736 105

## Beschreibung

Die Erfindung betrifft einen Katalysator für die katalytische Behandlung von Abgas. Der Katalysator ist insbesondere vorgesehen, um Abgas von einem Verbrennungsmotor, zum Beispiel einem Benzin-Verbrennungsmotor, durch eine katalytische Behandlung zu reinigen und/oder zu entgiften, d.h. von Schadstoffen zu befreien, indem diese durch eine chemische Reaktion umgewandelt werden. Der Verbrennungsmotor kann beispielsweise zu einem Automobil oder sonstigen Motorfahrzeug gehören oder für den stationären Betrieb - etwa zum Antreiben eines Notstrom-Generators - dienen.

Bekannte Katalysatoren besitzen ein Gehäuse mit einem Einlass sowie einem Auslass für das Abgas. Das Gehäuse enthält gasdurchlässige Katalysatormittel, in denen das Abgas beim Betrieb der Katalysatoren katalytisch behandelt wird. Die Katalysatormittel besitzen zum Beispiel einen häufig als Substrat bezeichneten Katalysator-Körper oder mehrere beim Betrieb nacheinander vom Abgas durchströmte Katalysator-Körper bzw. Substrate.

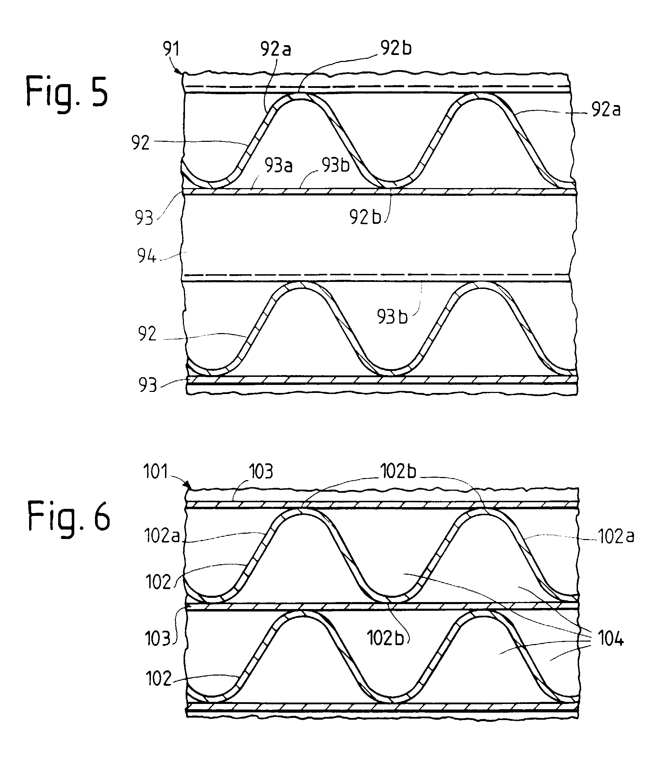

Aus der Publikation EP-A 0 514 326 sind unter anderem Katalysatoren mit Gehäusen bekannt, die einen zylindrischen Mantel und zwei ebene Endwände aufweisen und Katalysatormittel mit mindestens einem ringförmigen Katalysator-Körper enthalten. Der bzw. jeder ringförmige Katalysator-Körper hat eine Aussenfläche, eine Innenfläche und von der Innenfläche zur Aussenfläche verlaufende Durchgänge. Bei den in den Figuren 6 sowie 10 der zitierten Publikation ersichtlichen Katalysatoren mündet der Einlass in einen von der Innenfläche eines ringförmigen Katalysator-Körpers umschlossenen Innenraum. Beim Betrieb dieser Katalysatoren strömt das Abgas durch den Einlass in den Innenraum, wird in diesem nach aussen umgelenkt und strömt von innen nach aussen durch den Katalysator-Körper hindurch in einen äusseren, ringförmigen Hohlraum. Untersuchungen haben gezeigt, dass die Strömungsgeschwindigkeit und die Stromdichte des Abgases in den Katalysator-Körpern entlang der Achse noch etwas variiert, wobei die Verteilung der Stromdichte zudem von der Menge des pro Zeiteinheit zugeführten Abgases abhängt. Die Inhomogenität der Strömungsverteilung reduziert den Wirkungsgrad der Katalysator-Körper und verursacht zudem eine axial inhomogene Erhitzung, so dass die Katalysator-Körper grösser bemessen werden müssen, als es bei einer homogen auf die axiale Ausdehnung der Katalysator-Körper verteilten Abgas-Strömung der Fall wäre. Ein weiterer Nachteil der in den Figuren 6 und 10 der zitierten Publikation gezeichneten Katalysatoren besteht noch darin, dass ihre Gehäuse - bezogen auf die Menge des zu behandelnden Abgases - einen ziemlich grossen Durchmesser haben, was die Anordnung der Katalysatoren unter einem Automobil erschwert. Nun könnte man zwar die Aussen- und Innendurchmesser der ringförmigen Katalysator-Körper kleiner bemessen und dafür die axiale Abmessung der ringförmigen Katalysator-Körper derart vergrössern, dass das Volumen der Katalysator-Körper konstant bleibt. Dann wird jedoch die axiale Inhomogenität der Strömungsverteilung in den Katalysator-Körpern grösser.

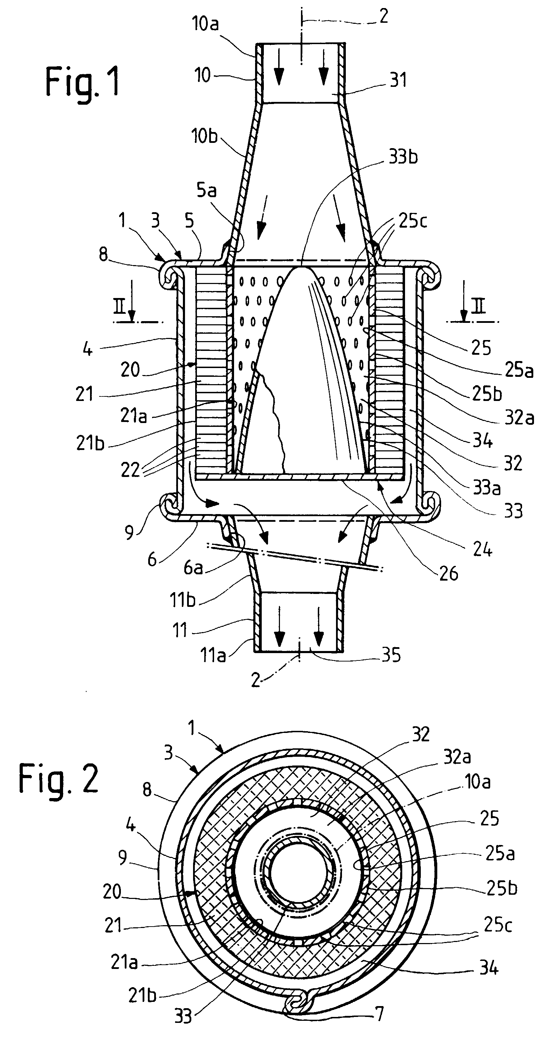

Beim in der Figur 5 der zitierten Publikation gezeichneten Katalysator mündet der Einlass in einem Umlenk-Hohlraum, der mit einem zwischen dem Mantel des Gehäuses und der sich vom Einlass weg konisch erweiternden Aussenfläche des ringförmigen Katalysator-Körpers vorhandenen, ringförmigen, äusseren Hohlraum verbunden ist. Beim Betrieb dieses Katalysators strömt das Abgas durch den Einlass in den Umlenk-Hohlraum, wird in diesem nach aussen umgelenkt, gelangt in den äusseren Hohlraum, strömt bei der Aussenfläche des Katalysator-Körpers in diesen hinein, strömt durch den Katalysator-Körper hindurch in einen Innenraum und verlässt den Katalysator durch den Auslass. Die konische Aussenfläche des Katalysator-Körpers verbessert die Homogenität der Stromdichte im Katalysator-Körper. Da dieser aus ringförmigen, gewellten Blechelementen mit entlang der Achse sukzessive ändernden Durchmessern besteht, ist die Herstellung dieses Katalysator-Körpers jedoch aufwendig. Ferner kann das Abgas beim Katalysator gemäss der Fig. 5 wie übrigens auch bei den Katalysatoren gemäss den Figuren 1 bis 3 sowie 7 bis 9 der zitierten Publikation in Kontakt mit grossen Wandungsteilen des Gehäuses gelangen und über diese relativ viel Wärme an die Umgebung abgeben, bevor es in den Katalysator-Körper einströmt. Dies hat bei einem sogenannten Kalt-Start, d.h. wenn der Katalysator beim Beginn der Abgas-Zufuhr ungefähr Umgebungstemperatur aufweist, den Nachteil, dass es relativ lang dauert, bis der Katalysator-Körper die für eine effiziente Abgasbehandlung erforderliche Temperatur erreicht.

Ein aus der Publikation DE-A 2 201 881 bekannter Katalysator hat ein Gehäuse mit einem zylindrischen Mantel, der durch sich von diesem weg konisch verjüngende Übergangsabschnitte mit zylindrischen Stutzen verbunden ist, die als Einlass bzw. Auslass für das Abgas dienen. Das Gehäuse enthält einen Katalysator-Körper mit axialen Durchgängen für das Abgas. Der Katalysator-Körper ist zum grössten Teil zylindrisch, hat jedoch an seinem sich näher beim Einlass befindenden Ende einen kegelstumpfförmigen Endabschnitt, der in den konischen Übergangsabschnitt des Gehäuses hineinragt. Gemäss der Zeichnung dieser Publikation hat der Katalysator-Körper rechtwinklig zu seiner Achse und damit rechtwinklig zur Strömungsrichtung des ihn durchströmenden Abgases eine Querschnittsfläche, die nur ungefähr viermal grösser ist als die Querschnittsfläche der von den Stutzen begrenzten Hohlräume. Das Abgas durchströmt daher den Katalysator-Körper mit einer relativ grossen Geschwindigkeit. Die einzelnen Durchgänge des Katalysator-Körpers müssen daher relativ grosse Querschnittsabmessungen haben, da sonst der Strömungswiderstand und der Druckverlust sehr gross werden. Grosse Querschnittsabmessungen der einzelnen Durchgänge haben jedoch zur Folge, dass das den Katalysator-Körper durchströmende Abgas nur einen relativ kleinen Kontakt mit den mit katalytisch aktivem Material beschichteten, die Durchgänge begrenzenden Flächen des Katalysator-Körpers hat. Die Durchgänge müssen daher verhältnismässig lang sein, was den Strömungswiderstand und Druckverlust in unerwünschter Weise erhöht. Zudem sind das Volumen, das Gewicht und die Herstellungskosten des Katalysator-Körpers, bezogen auf die den Katalysator pro Zeiteinheit durchströmenden Abgasmengen, verhältnismässig hoch. Gemäss der zuletzt zitierten Publikation soll der kegelstumpfförmige Endabschnitt des Katalysator-Körpers das durch den Einlass einströmende Abgas gleichmässig auf die ganze Querschnittsfläche des Katalysator-Körpers verteilen. Die Inhaberin der vorliegenden Patentanmeldung hat jedoch für einen ähnlich ausgebildeten Katalysator numerische Strömungsrechnungen durchgeführt, die zeigen, dass die Stromdichte im Katalysator-Körper immer noch vom Abstand von der Achse abhängig ist und in den äusseren Querschnittsbereichen kleiner ist als im mittleren Querschnittsbereich. Da der an den Einlass-Stutzen anschliessende, konische Übergangsabschnitt des Gehäuses gemäss der Zeichnung der zuletzt zitierten Publikation mit der Achse einen ziemlich grossen, nämlich ungefähr 30° betragenden Winkel bildet, besteht bei grossen Strömungsgeschwindigkeiten zudem die Gefahr, dass sich die Abgas-Strömung beim Einströmen in den vom konischen Übergangsabschnitt begrenzten Bereich des Innenraums des Gehäuses von dessen Wand ablöst und turbulent wird, was den Strömungswiderstand vergrössert.

Ein aus der Publikation GB-A 2 128 893 bekannter Katalysator besitzt einen hohlzylindrischen Katalysator-Körper. Der Einlass des Katalysators mündet in den von der zylindrischen Innenfläche des Katalysators umschlossenen Innenraum. Die zylindrische Aussenfläche und die dem Auslass zugewandte Endfläche des Katalysator-Körpers grenzen an einen äusseren, mit dem Auslass verbundenen Hohlraum an. Der Katalysator-Körper ist aus einem Wickel eines ursprünglich ebenen und eines gewellten Drahtgewebes gebildet und sowohl in axialer als auch in radialer Richtung gasdurchlässig. Beim Betrieb des Katalysators strömt das Abgas bei der zylindrischen Innenfläche des Katalysator-Körpers in diesen hinein und dann zum Teil bei der zylindrischen Aussenfläche sowie zum Teil bei der ebenen Endfläche des Katalysator-Körpers wieder aus diesem heraus. Dieser Katalysator hat den Nachteil, dass die Strömungsgeschwindigkeit und Strömungsdichte des bei der Innenfläche des Katalysator-Körpers in diesen einströmenden Abgases entlang der Achse ziemlich stark variiert. Ferner legt das Abgas unterschiedlich lange und zum Teil nur sehr kurze Wege im Katalysator-Körper zurück und wird daher zum Teil nur ungenügend katalytisch behandelt.

Ein aus der Publikation US-A 3 736 105 bekannter Katalysator besitzt ein Gehäuse und Katalysatormittel, die ein inneres und ein äusseres, konisches, im Querschnitt ringförmiges Katalysator-Bett aufweisen. Jedes Katalysator-Bett ist durch perforierte, konische Mäntel begrenzt und weist ein zwischen diesen angeordnetes, teilchenförmiges Material auf. Der Einlass mündet in den vom inneren, konischen Mantel umschlossenen, Innenraum. Dieser verjüngt sich vom Einlass weg, hat aber an seinem dem Einlass abgewandten Ende einen Durchmesser, der noch ungefähr 30% des Durchmessers des mit dem Einlass verbundenen Endes des inneren Hohlraums beträgt. Die Strömungsgeschwindigkeit und Stromdichte des beim inneren Mantel des inneren Katalysator-Bettes in dieses einströmenden Abgases variiert auch bei diesem Katalysator ziemlich stark entlang der Achse. Dabei ist die Abgas-Verteilung insbesondere auch abhängig von der Geschwindigkeit und Menge des durch den Einlass strömenden Abgases. Da das Katalysator-Bett aus einem teilchenförmigen Material besteht, kann zudem die Dichte und Gasdurchlässigkeit des Bettes örtlich verschieden sein und im Verlauf der Zeit variieren.

Der Erfindung liegt die Aufgabe zugrunde, einen Katalysator zu schaffen, mit dem Nachteile der bekannten Katalysatoren verhindert werden können. Dabei soll - zum Beispiel ausgehend von dem aus der Figur 5 der Publikation EP-A 0 514 326 bekannten Katalysator - insbesondere beim Betrieb eine möglichst homogene Verteilung der Stromdichte über eine Innenfläche der Katalysatormittel und ein möglichst kleiner Strömungswiderstand erzielt werden. Ferner soll der Katalysator gut unter dem Boden eines Automobils einbaubar sowie wirtschaftlich herstellbar sein und bei einem Kalt-Start rasch eine gute, katalytische Abgas-Behandlung ergeben.

Diese Aufgabe wird gemäss der Erfindung durch einen Katalysator mit den Merkmalen des Anspruchs 1 gelöst.

Vorteilhafte Ausgestaltungen des Katalysators gehen aus den abhängigen Ansprüchen hervor.

Das Gehäuse und die Katalysatormittel können beispielsweise im wesentlichen rotationssymmetrisch zur Achse des Katalysators sein. Die Katalysatormittel können dann einen hohlzylindrischen, im Querschnitt kreisförmigen Katalysator-Körper aufweisen.

Das Gehäuse und/oder die Innenfläche der Katalysatormittel und/oder die Aussenfläche der Katalysatormittel kann jedoch auch nicht-rotationssymmetrisch zur Achse des Katalysators sein. Das Gehäuse des Katalysators kann dann zum Beispiel einen Mantel mit einer ovalen oder ovalähnlichen Querschnittsform aufweisen. Des weiteren können die Katalysatormittel dann beispielsweise eine Aussenfläche bzw. Umfangsfläche mit einer im Querschnitt ovalen oder ovalähnlichen Form haben. Der Begriff "ovalähnliche Form" soll dabei auch Ellipsen oder Rechtecke umfassen, bei denen die Ecken oder sogar die ganzen kürzeren Seiten durch Bogen ersetzt sind. Man kann der ovalen oder ovalähnlichen Form bzw. Linie analog wie einer Ellipse und einem Oval eine längere Hauptachse und eine dazu rechtwinklige, kürzere Nebenachse zuordnen.

Der Erfindungsgegenstand wird nun anhand in der Zeichnung dargestellter Ausführungsbeispiele erläutert. In der Zeichnung zeigt
die Fig. 1 einen Axialschnitt durch einen Katalysator,
die Fig. 2 einen Querschnitt durch den Katalysator entlang der Linie II - II der Fig. 1,
die Fig. 3 einen Axialschnitt durch einen andern Katalysator,
die Fig. 4 einen Querschnitt durch den Katalysator gemäss der Fig. 3 entlang der Linie IV - IV der letzteren,
die Fig. 5 einen Schnitt durch einen Katalysatorkörper der Katalysatoren in grösserem Massstab,
die Fig. 6 einen Schnitt durch einen anderen Katalysator-körper.

Der in den Figuren 1 und 2 ersichtliche Katalysator 1 für die katalytische Behandlung von Abgas besitzt eine Mittel- und/oder Längsachse 2 und ein längliches, zum Beispiel im wesentlichen zur Achse 2 rotationssymmetrisches Gehäuse 3. Das Gehäuse 3 hat eine metallische, zum Beispiel aus rostfreiem Stahl bestehende Wandung mit einem die Achse 2 umschliessenden Mantel 4 und bei dessen Enden je eine Endwand 5 bzw. 6.

Der Mantel 4 ist parallel zur Achse 2, im wesentlichen zylindrisch und im Querschnitt zum Beispiel im wesentlichen kreisförmig. Der Mantel 4 besteht zum Beispiel aus einem zu einem Zylinder gebogenen Blechstück mit zur Achse 2 parallelen Rändern, die gebördelt und/oder gefalzt und durch eine Bördel- und/oder Falzverbindung 7 miteinander verbunden sind. Die sich an den beiden Enden des Mantels 4 befindenden Ränder von diesem sind durch Bördel- und/oder Falzverbindungen 8 bzw. 9 mit den beiden ebenfalls aus Blechstücken gebildeten Endwänden 5 bzw. 6 verbunden. Die Endwände 5 und 6 haben im Zentrum einen vom Mantel wegragenden Kragen, der ein Loch 5a bzw. 6a begrenzt. Das Gehäuse besitzt ferner einen Einlass 10 und einen Auslass 11 für das Abgas. Der Einlass 10 und der Auslass 11 sind koaxial zur Achse 2 und bestehen je aus einem Stutzen, der in das Loch 5a bzw. 6a hineinragt, wobei der zum Einlass 10 gehörende Stutzen eventuell durch das Loch 5a hindurch ein wenig in den vom Mantel 4 umschlossenen Raum ragt. Die beiden Stutzen sind fest und dicht mit der Endwand 5 bzw. 6 verbunden, nämlich mit dem das Loch 5a bzw. 6a begrenzenden Kragen verschweisst. Der Einlass 10 und der Auslass 11 haben an ihren dem Mantel abgewandten Enden einen zylindrischen Endabschnitt 10a bzw. 11a und einen sich von diesem weg zu den Endwänden hin konisch erweiternden Übergangsabschnitt 10b bzw. 11b. Von den beiden konischen Übergangsabschnitten 10b, 11b soll zumindest der zum Einlass 10 gehörende Übergangsabschnitt 10b mit der Achse 2 einen Winkel bilden, der vorzugsweise höchstens 20° und zum Beispiel höchstens 15° beträgt.

Im Gehäuse sind Katalysatormittel 20 angeordnet. Diese weisen einen ring- und/oder hülsenförmigen, die Mittel- und/oder Längsachse 2 umschliessenden, zu dieser koaxialen Katalysator-Körper 21 auf, der in der Fachsprache häufig als Substrat bezeichnet wird. Der Katalysator-Körper 21 hat eine Innenfläche 21a und eine Aussenfläche 21b. Die beiden Flächen 21a, 21b sind in einem zur Achse 2 rechtwinkligen Querschnitt kreisförmig und parallel zur Achse 2 sowie zum Mantel 4. Der Katalysator-Körper 21 bildet also einen im Querschnitt kreisförmigen Hohlzylinder. Wie noch näher beschrieben wird, besitzt der Katalysator-Körper 21 eine Anzahl von ringförmigen, aneinander anliegenden Blechelementen, auf die mindestens ein katalytisch aktives Edelmetall aufgebracht ist und die zusammen in der Fig. 1 mit 22 bezeichnete Durchgänge für das Abgas begrenzen. Die Durchgänge 22 verlaufen im wesentlichen entlang von zur Achse 2 rechtwinkligen Ebenen von der Innenfläche 21a zur Aussenfläche 21b.

Die Katalysatormittel 20 weisen ferner Haltemittel 24 auf, welche die Blechelemente zusammenhalten und das den Katalysator-Körper 21 bildende Paket von Blechelementen mit dem Gehäuse 3 verbinden. Die Haltemittel 24 weisen zum Beispiel eine metallische Hülse 25 auf, welche den Katalysator-Körper 21 durchdringt. Die Hülse 25 hat eine Innenfläche 25a sowie eine Aussenfläche 25b und ist zylindrisch, so dass die Innenfläche 25a und die Aussenfläche 25b parallel zur Achse 2 sind. Die Innenfläche 25a und Aussenfläche 25b sind im Querschnitt kreisförmig. Der Innendurchmesser der Hülse 25 ist ungefähr und vorzugsweise genau gleich gross wie der Innendurchmesser des sich näher bei der Endwand 5 befindenden Endes des Einlasses 10, d.h. des weiteren Endes des konischen Einlass-Abschnitts 10b. Der Aussendurchmesser der Hülse 25 ist zum Beispiel geringfügig kleiner als der Innendurchmesser des von ringförmigen Blechelementen gebildeten Katalysator-Körpers 21, so dass zwischen diesem und der Hülse 25 ein schmaler, im Querschnitt ringförmiger Spalt vorhanden ist. Der Aussendurchmesser der Hülse 25 kann jedoch stattdessen gleich dem Innendurchmesser des Katalysator-Körpers 21 sein, so dass dieser die Hülse 25 satt und spielfrei umschliesst. Die Hülse ist mit einer Perforation versehen, die durch eine Vielzahl von radialen Löchern 25c gebildet ist.

Es sei hier angemerkt, dass die Figuren 1 und 2 zum Teil nicht massstäblich gezeichnet sind und dass insbesondere die Wanddicken der Gehäuseseile, die parallel zur Achse 2 gemessenen Abmessungen sowie Abstände der Durchgänge 22 und die Abmessungen und Abstände der Löcher 25c in Wirklichkeit im Vergleich zu den Aussenabmessungen des Gehäuses 3 und des Katalysator-Körpers 21 viel kleiner sind als es in den Figuren 1 und 2 gezeichnet ist. Ferner sind die Löcher 25c in Wirklichkeit derart bemessen und verteilt, dass sich die Löcher 25c entlang der Achse 2 lückenlos überlappen. Des weiteren sind die Katalysator-Körper 21 und die Hülse 25 derart ausgebildet, dass beim Betrieb des Katalysators 1 durch die Löcher 25a strömendes Abgas in alle Durchgänge 22 strömen kann. Das Abgas kann dabei mindestens zum Teil aus Löchern 25c in zur Achse 2 radialer Richtung in einen Durchgang 22 gelangen. Falls zwischen dem Katalysator-Körper 21 und der Hülse 25 ein ringförmiger Spalt vorhanden ist, kann sich das Abgas beim Betrieb auch noch in diesem verteilen und zwischen den einander benachbarten Löchern 25c entlang der Innenfläche 21a des Katalysator-Körpers 21 und der Aussenfläche 25b der Hülse 25 strömen. Wenn man die Hülse 25 als Teil der Katalysatormittel 20 auffasst, bilden die Löcher 25c der Hülse 25 zusammen mit den Durchgängen 22 des Katalysators-Körpers 21 die Durchgänge 22, 25c der ganzen Katalysatormittel 20.

Die Hülse 25 besteht aus einem metallischen Material, beispielsweise rostfreiem Stahl, und ist an ihrem dem Einlass 10 zugewandten Ende fest und dicht mit diesem verbunden. Die Hülse 25 und der den Einlass 10 bildende Stutzen können zum Beispiel aus ursprünglich separaten Teilen bestehen und bei der von der Innenfläche der Endwand 5 aufgespannten Ebene oder in kleinem Abstand von dieser in dem vom Mantel 4 umschlossenen Raum fest und dicht miteinander verschweisst sein. Der Einlass 10 und die Hülse 25 könnten jedoch auch aus einem einstückigen Körper bestehen. Ferner könnte die Hülse 25 statt direkt mit dem den Einlass 10 bildenden Stutzen mit der Endwand 5 verschweisst und über diese mit dem letztgenannten Stutzen verbunden sein.

Die Haltemittel 24 weisen ferner ein Halteorgan 26 auf. Dieses besteht aus einem ebenen, kreisförmigen, metallischen Plättchen, dessen Durchmesser ungefähr gleich dem Aussendurchmesser des Katalysator-Körpers 21 ist. Das Halteorgan 26 ist fest und dicht am dem Einlass 10 abgewandten Ende der Hülse 25 befestigt, nämlich mit dieser verschweisst. Der Katalysator-Körper 21 ist zwischen der Endwand 5 und dem Halteorgan 26 angeordnet und liegt zum Beispiel direkt an der Endwand 5 und dem Halteorgan 26 an, so dass die Endwand 5 und das Halteorgan 26 die ringförmigen Blechelemente des Katalysator-Körpers 21 zusammenhalten.

Der Einlass 10 umschliesst im Querschnitt einen Einlass-Innenraum 31. Die Katalysatormittel 20 und die Hülse 25 begrenzen und umschliessen im Querschnitt einen Katalysatormittel-Innenraum oder inneren Hohlraum 32, der mit dem Einlass-Innenraum 31 verbunden und an seinem dem Einlass 10 abgewandten Ende durch das auch als Abschlussorgan dienende Halteorgan 26 dicht abgeschlossen ist. Ein Begrenzungs- und/oder Leitelement 33 ist mindestens zum Teil im Katalysatormittel-Innenraum 32 angeordnet und besitzt eine mindestens zum Teil der Innenfläche 25a der Hülse 25 und damit auch der Innenfläche 21a des Katalysator-Körpers 21 zugewandte Begrenzungs- und/oder Leitfläche 33a. Diese nähert sich mindestens in einem Teil des Innenraums 32 in vom Einlass 10 weg verlaufender Richtung an die Innenflächen 21a und 25a an. Dabei ist ein sich mindestens entlang von 50% der axialen, d.h. parallel zur Achse 2 gemessenen Abmessung der Katalysatormittel 20 und der Innenflächen 21a sowie 25a erstreckender Teil der Begrenzungs- und/oder Leitfläche 33a und vorzugsweise ein sich im wesentlichen entlang der ganzen axialen Abmessung der Katalysatormittel 20 und der Innenflächen 21a sowie 25a erstreckender Teil der Begrenzungs- und/oder Leitfläche 33a in vom Einlass 10 wegverlaufender Richtung von der Achse 2 weg nach aussen zu den Innenflächen 21a und 25a hin geneigt. Die Begrenzungs- und/oder Leitfläche 33a ist an dem sich näher beim Einlass 10 befindenden Ende 33b des Begrenzungs- und/oder Leitelements 33 mindestens im in der Fig. 1 gezeichneten Axialschnitt und nämlich auch in allen anderen, möglichen Axialschnitten gebogen und stetig mit einem den Innenflächen 21a und 25a zugewandten Bereich der Fläche 33a zusammenhängend. Ferner ist im wesentlichen die ganze sich im Innenraum 32 befindende Fläche 33a mindestens im in der Fig. 1 gezeichneten Axialschnitt und nämlich auch in allen anderen möglichen Axialschnitten konvex gebogen und im wesentlichen mindestens ungefähr parabelförmig. Das Begrenzungs- und/oder Leitelement 33 besteht dementsprechend aus einem zur Achse 2 rotationssymmetrischen, mindestens ungefähr sowie im wesentlichen paraboloidförmigen Hohlkörper und ist bei seinem dickeren, weiter vom Einlass 10 entfernten Ende zum Beispiel durch eine Schweissverbindung starr und dicht am Halteorgan 24 und/oder an der Hülse 25 befestigt. Das den Scheitelpunkt des Paraboloids bildende Ende 33b des Begrenzungs- und/oder Leitelements 33 befindet sich ungefähr bei der zur Achse 2 rechtwinkligen Ebene, bei welcher der Einlass 10 in den Katalysatormittel-Innenraum 32 mündet. Das Begrenzungs- und/oder Leitelement 33 begrenzt im Innenraum 32 zusammen mit der den letzteren umschliessenden Hülse 25 einen im Querschnitt ringförmigen, freien Innenraumbereich 32a. Die Querschnittsfläche des Innenraumbereichs 32a nimmt entlang der Achse 2 vom Einlass 10 weg ab und zwar mindestens ungefähr oder genau linear mit dem Abstand vom Einlass 10 und vom Ende 33b des Begrenzungs- und/oder Leitelements 33. Das weiter vom Einlass 10 entfernte Ende der Begrenzungs- und/oder Leitfläche 33a berührt die Innenfläche 25a der Hülse 25 oder hat von dieser rechtwinklig und radial zur Achse 2 einen Abstand, der höchstens 5% und besser höchstens 3% des Durchmessers der Innenfläche 25a und des Innenraums 33 ist.

Ein äusserer Hohlraum 34 besitzt einen sich zwischen dem Mantel 4 und der Aussenfläche 21b des Katalysator-Körpers 21 von der Endwand 5 bis zur Endwand 6 erstreckenden Abschnitt und einen sich zwischen der Endwand 6 und dem Halteorgan 26 befindenden Abschnitt. Der äussere Hohlraum 34 ist durch den Katalysator-Körper 21, die Hülse 25 und das Halteorgan 26 vom Einlass-Innenraum 31 und vom Katalysatormittel-Innenraum 32 getrennt. Der äussere Hohlraum 34 ist mit einem vom Auslass 11 umschlossenen Auslass-Innenraum 35 verbunden.

Die den Katalysatormittel-Innenraum 32 im Querschnitt umschliessende Innenfläche 25a der Hülse 25 bildet auch die Innenfläche der ganzen Katalysatormittel 20 und dient beim Betrieb als Abgas-Eintrittsfläche der Katalysatormittel 20. Die Innenfläche 21a des Katalysator-Körpers 21 bildet dementsprechend dessen Abgas-Eintrittsfläche. Die Aussenfläche 21b des Katalysator-Körpers 21 bildet auch die Aussenfläche und die Abgas-Austrittsfläche der ganzen Katalysatormittel 20.

Die Länge, d.h. die parallel zur Achse 2 gemessene Abmessung des Katalysator-Körpers 21 ist mindestens gleich dem radialen Abstand der Aussenfläche 21b von der Innenfläche 21a und vorzugsweise mindestens zweimal und zum Beispiel sogar mindestens dreimal grösser als der genannte Abstand. Der Aussendurchmesser des Katalysator-Körpers 21 ist zum Beispiel höchstens oder ungefähr gleich gross wie die axiale Abmessung des Katalysator-Körpers 21. Ferner ist der Aussendurchmesser zum Beispiel höchstens oder ungefähr dreimal grösser als der Innendurchmesser des zylindrischen Abschnittes 10a des Einlasses 10. Der maximale Aussendurchmesser des Gehäuses 3 ist vorzugsweise höchstens fünfmal grösser als der Innendurchmesser und als der Aussendurchmesser des zylindrischen Abschnitts 10a des Einlasses 10. Die Innenflächen 21a und 25a sind vorzugsweise mindestens 10-mal und noch besser 15-mal grösser als die Querschnittsfläche des Innenraums des zylindrischen Einlass-Abschnitts 10a.

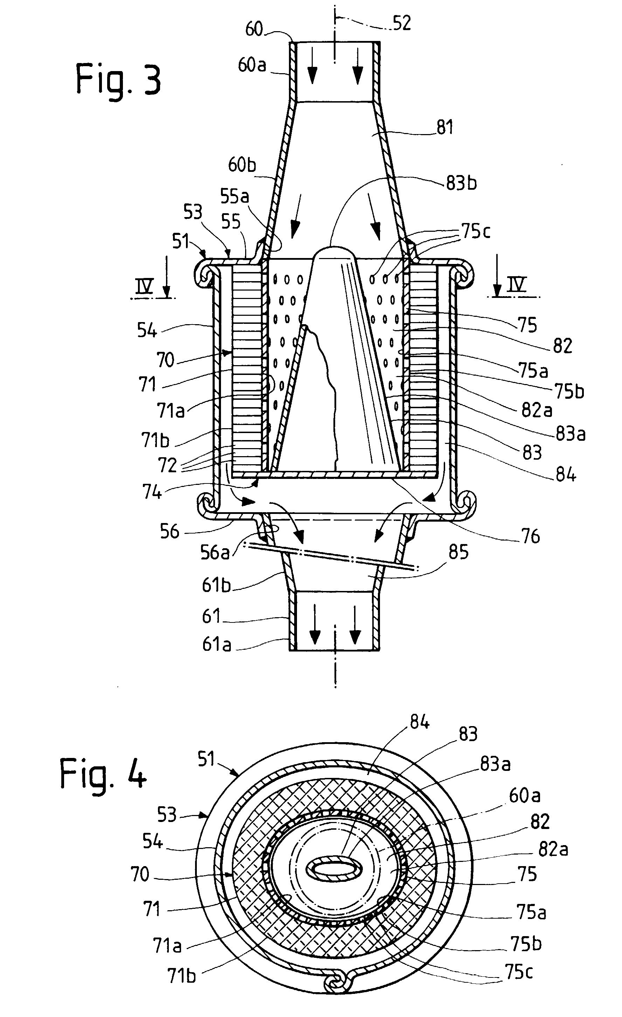

Der in den Figuren 3 und 4 gezeichnete Katalysator 51 besitzt eine Mittel- und/oder Längsachse 52 und ein Gehäuse 53. Dieses hat einen Mantel 54 und zwei Endwände 55, 56. Der Mantel 54 und die Endwände 55, 56 haben zur Achse 52 nicht-rotationssymmetrische Formen und sind zum Beispiel in zur Achse 2 paralleler Blickrichtung oval oder ovalähnlich. Die Endwand 55 hat ein zentrales Loch 55a, das ebenfalls oval oder ovalähnlich ist. Die Endwand 56 hat ein zentrales Loch 56a, das kreisförmig oder eventuell auch oval oder ovalähnlich ist. Das Gehäuse 53 ist mit einem Einlass 60 und einem Auslass 61 versehen. Der Einlass 60 hat einen zylindrischen, im Querschnitt kreisförmigen Abschnitt 60a und einen Übergangsabschnitt 60b, der sich vom zylindrischen Abschnitt - 60a bis ins Loch 55a hinein ersteckt und im Querschnitt satt in dieses hineinpasst. Der in der Fig. 3 gezeichnete Axialschnitt verläuft durch die längere Hauptachse der vom Gehäuse 53 und dem Loch 55a definierten Ovale. Der Übergangsabschnitt 60b erweitert sich im in der Fig. 3 gezeichneten Axialschnitt vom zylindrischen Abschnitt 60a zur Endwand 55 hin. In einem durch die kürzeren Hauptachsen der Ovale verlaufenden, zur Schnittebene der Fig. 3 rechtwinkligen Axialschnitt kann der Übergangsabschnitt 60b - abhängig von der in diesem Axialschnitt gemessenen Querschnittsabmessung des Lochs 55a - vom zylindrischen Abschnitt 60a weg weiter werden oder enger werden oder parallel zur Achse 52 sein. Der Auslass 61 hat ebenfalls einen zylindrischen, im Querschnitt kreisförmigen Abschnitt 61a und einen sich von diesem weg bis in das Loch 56a der Endwand 56 erstreckenden Übergangsabschnitt 61b. Der letztere kann entsprechend der Form des Loches 56a rotationssymmetrisch zur Achse 52 und konisch sein oder an seinen sich im Loch 56a befindende Enden eine ovale oder ovalähnliche Querschnittsform haben.

Das Gehäuse 53 enthält Katalysatormittel 70 mit einem Katalysator-Körper 71. Dieser hat eine Innenfläche 71a und eine Aussenfläche 71b. Diese Flächen sind parallel zur Achse 52 und in einem zur letzteren rechtwinkligen Querschnitt mindestens ungefähr oval sowie mindestens ungefähr parallel zum Mantel 54. Der Katalysator-Körper 71 bildet also einen im Querschnitt ovalen oder ovalähnlichen Hohlzylinder. Der Katalysator-Körper 71 enthält und begrenzt Durchgänge 72 für das Abgas. Die Katalysatormittel 70 weisen ferner Haltemittel 74 mit einer im Querschnitt ovalen oder ovalähnlichen Hülse 75 auf, die eine Innenfläche 75a, eine Aussenfläche 75b und Löcher 75c besitzt. Ferner ist ein zu den Haltemitteln 74 gehörendes Halteorgan 76 vorhanden, das aus einem ebenen, ovalen oder ovalähnlichen Plättchen besteht.

Der Einlass 60 umschliesst im Querschnitt einen Einlass-Innenraum 81, der in einen im Querschnitt von der Hülse 75 und von den Katalysatormitteln 70 umschlossenen Katalysatormittel-Innenraum oder inneren Hohlraum 82 mündet. In diesen ist ein Begrenzungs- und/oder Leitelement 83 angeordnet, das aus einem am Halteorgan 76 und/oder an der Hülse 75 befestigten, nämlich angeschweissten Hohlkörper besteht und aussen eine Begrenzungs- und/oder Leitfläche 83a besitzt. Das dem Halteorgan 76 abgewandte Ende 83b des Begrenzungs- und/oder Leitelements 83 ist ungefähr beim sich näher beim Einlass befindenden Ende des Katalysatormittel-Innenraums 82 angeordnet und ragt zum Beispiel noch ein wenig aus dem letzteren heraus in den Übergangsabschnitt 60b des Einlasses 60 hinein. Die Begrenzungs- und/oder Leitfläche 83a ist mindestens im grössten Teil des Innenraums 82 und vorzugsweise im wesentlichen im ganzen Innenraum 82 in vom Einlass 60 wegverlaufender Richtung von der Achse 52 weg nach aussen zur Innenfläche 75a der Hülse 75 hin geneigt. Der grösste Teil der Begrenzungs- und/oder Leitfläche 83a ist im in der Fig. 3 gezeichneten Axialschnitt und beispielsweise auch in allen anderen Axialschnitten gerade. Am Ende 83b des Elements 83 hat die Fläche 83a einen im in der Fig. 1 gezeichneten Axialschnitt und beispielsweise auch in allen anderen Axialschnitten gebogenen Abschnitt, der stetig mit dem in den Axialschnitten geraden Bereich der Begrenzungs- und/oder Leitfläche 83a zusammenhängt. Die letztere ist an ihrem dem Einlass abgewandten Ende in zur Achse 52 paralleler Blickrichtung sowie im Querschnitt oval oder ovalähnlich, mindestens annähernd parallel zur Innenfläche 75a der Hülse 75 und derart bemessen, dass sie die Innenfläche 75a berührt oder von dieser einen Abstand hat, der höchstens 5% und besser höchstens 3% des maximalen Durchmessers, d.h. der maximalen, entlang der längeren Oval-Hauptachse gemessenen Querschnittsabmessung des Innenraums 82 ist. Die Begrenzungs- und/oder Leitfläche 83a ist zum Beispiel im Querschnitt bis mindestens annähernd zum Ende 83b des Elements 83 oval oder ovalähnlich und im Querschnitt mindestens annähernd parallel zur Innenfläche 75a. Es sei hierzu auf den in der Fig. 4 ersichtlichen Querschnitt verwiesen, dessen entlang der Linie IV-IV der Fig. 3 verlaufende Schnittebene ziemlich nahe beim Ende 83b liegt.

Das Begrenzungs- und/oder Leitelement 83 begrenzt zusammen mit der Innenfläche 75a der Hülse 75 einen im Querschnitt ringförmigen, freien Innenraumbereich 82a. Ferner sind ein analog zum äusseren Hohlraum 34 des Katalysators 1 angeordneter, äusserer Hohlraum 84 und ein im Querschnitt vom Auslass 61 umschlossener Auslass-Hohlraum 85 vorhanden.

Soweit vorgängig nichts anderes geschrieben wurde, kann der Katalysator 51 gleich oder ähnlich wie der Katalysator 1 ausgebildet sein. Die Teile des Katalysators 51 entsprechen dabei jeweils Teilen des Katalysators 1, welche mit Bezugszeichen bezeichnet sind, die um 50 kleiner sind als die zur Bezeichnung der Teile des Katalysators 51 dienenden Bezugsnummern.

Der Katalysator-Körper 21 und der Katalysator-Körper 71 kann beispielsweise gemäss der Fig. 5 ausgebildet sein, die einen Ausschnitt aus einem Katalysator-Körper zeigt, der in der Fig. 5 mit 91 bezeichnet ist. Der Katalysator-Körper 91 besitzt ein Paket ringförmiger Blechelemente 92 und 93, die entlang der Achse des Katalysators 1 bzw. 51 abwechselnd aufeinander folgen. Die einen, inneren Ränder der Blechelemente 92, 93 bilden zusammen die Innenfläche 21a bzw. 71a des Katalysator-Körpers 21 bzw. 71. Die anderen, äusseren Ränder der Blechelemente 92, 93 bilden zusammen die Aussenfläche 21b bzw. 71b des Katalysator-Körpers 21 bzw. 71 bzw. 91. Jedes Blechelement 92, 93 besitzt eine Anzahl Wellen 92a bzw. 93a mit Wellenscheiteln 92b zw. 93b. Die Wellen 92a und Wellenscheitel 92b sind gerade sowie parallel zueinander und verlaufen rechtwinklig zur Zeichen- und Schnittebene der Fig. 5. Die Wellen 93a und Wellenscheitel 93b sind ebenfalls gerade und parallel zueinander, bilden jedoch mit den Wellen 92a und Wellenscheiteln 92b einen rechten Winkel und verlaufen parallel zur Zeichen- und Schnittebene der Fig. 5. Die Wellen 92a kreuzen also die Wellen 93a, wie es in den Figuren 2 und 4 durch einander kreuzende, volle bzw. gestrichelte Geraden angedeutet ist.

Jeweils zwei einander benachbarte Blechelemente 92, 93 berühren sich bei den Kreuzungsstellen in ihrer gegeneinander ragenden Wellenscheitel und also bei einer Vielzahl von regelmässig über ihre Oberfläche verteilten, annähernd punktartigen Berührungsstellen. In den übrigen, nicht von diesen punktähnlichen Berührungsstellen eingenommenen Oberflächenbereichen ist zwischen den zwei einander benachbarten Blechelementen ein freier Zwischenraum vorhanden, der einen in der Fig. 5 mit 94 bezeichneten Durchgang des Katalysator-Körpers bildet.

Die in den Figuren 1 bis 4 ersichtlichen Katalysator-Körper 21 und 71 könnten auch durch einen Katalysator-Körper gebildet oder ersetzt werden, wie er in der Fig. 6 gezeichnet und mit 101 bezeichnet ist. Der Katalysator-Körper 101 besitzt ein Paket von ringförmigen, abwechselnd aufeinander folgenden Blechelementen 102 und 103, deren Ränder zusammen die zylindrische Innenfläche und die zylindrische Aussenfläche des Katalysator-Körpers bilden. Jedes Blechelement 102 besitzt Wellen 102a mit Wellenscheiteln 102b. Die Blechelemente 102 sind jedoch derart ausgebildet, dass jede Welle 102a von der zylindrischen Innenfläche des Katalysator-Körpers 101 zur zylindrischen Aussenfläche des letzteren verläuft. Die Blechelemente 103 sind eben und liegen an den Wellenscheiteln 102b von ihren benachbarten Blechelementen 102 an. Ein Blechelement 102 begrenzt zusammen mit den beiden an ihm anliegenden Blechelementen 103 eine Anzahl von Durchgängen 104, die von der Innen- zur Aussenfläche des Katalysatorkörpers verlaufen und über ihre ganze Länge voneinander getrennt sind.

Jedes in den Figuren 5 und 6 ersichtliche Blechelement 92, 93, 102, 103 hat einen aus rostfreiem Stahl bestehenden Innenbereich oder Kernbereich, dessen Oberflächen mit einem Überzug aus Aluminiumoxid versehen sind. Auf diese Überzüge ist katalytisch aktives Material aufgebracht, das mindestens ein Edelmetall, beispielsweise Platin und/oder Rhodium aufweist. Die von Wellenbereich zu Wellenbereich gemessene Wellenhöhe der in den Figuren 5 und 6 ersichtlichen, beschichteten Blechelementen 93, 94, 102 beträgt vorzugsweise höchstens 1 mm und zum Beispiel ungefähr 0,3 mm bis 0,7 mm. Die Wellenlänge ist zum Beispiel zweimal bis viermal grösser als die Wellenhöhe.

Der Einlass 10 oder 60 eines Katalysators 1 bzw. 51 kann über Teile einer Auspuffeinrichtung mit dem Abgas-Auslass des Benzin-Verbrennungsmotors eines Automobils verbunden und unter dem Boden des letzteren angeordnet werden. Die Gehäuse der Katalysatoren 1 und 51 haben im Vergleich zum Innendurchmesser des zylindrischen Abschnitts 10a sowie 60a des Einlasses 10 bzw. 60 und im Vergleich zu der pro Zeiteinheit zu behandelnden Abgasmenge relativ kleine Querschnittsabmessungen, so dass sie gut Platz finden.

Beim Betrieb des Motors und des Katalysators strömt das Abgas in den in den Figuren 1 und 3 durch Pfeile bezeichneten Richtungen durch den Katalysator. Das Abgas strömt also durch den Einlass 10 bzw. 60 in den freien Bereich des Katalysatormittel-Innenraums 32 bzw. 82. Danach strömt das Abgas bei der durch die Innenfläche 25a, 75a der Hülse 25 bzw. 75 gebildeten Abgas-Eintrittsfläche der Katalysatormittel 20 bzw. 50 zuerst durch den Mantel der Hülse hindurch und dann bei der Innenfläche 21a bzw. 71a des Katalysator-Körpers 21 bzw. 71 in dessen Durchgänge 22 bzw. 72 hinein. Das Abgas strömt anschliessend durch den Katalysator-Körper hindurch, wobei es beim Kontakt mit den die Durchgänge 22 bzw. 72 begrenzenden Flächen katalytisch behandelt wird. Das Abgas tritt bei der als Abgas-Austrittsfläche der Katalysatormittel 20 bzw. 70 dienenden Aussenfläche 21b zw. 71b des Katalysator-Körpers 21 bzw. 71 aus diesem aus, strömt durch den äusseren Hohlraum 34 bzw. 84 und verlässt den Katalysator durch den Auslass 11 bzw. 61.

Das Begrenzungs- und Leitelement 33 bzw. 83 verteilt das vom Einlass-Innenraum 31 bzw. 81 in den Katalysatormittel-Innenraum 32 bzw. 82 einströmende Abgas bei in einem weiten Bereich variierenden Mengen des pro Zeiteinheit zugeführten Abgases mindestens annähernd gleichmässig auf die ganze Abgas-Eintrittsfläche der Katalysatormittel 20 bzw. 70. Untersuchungen und numerische Rechnungen haben gezeigt, dass die Strömungsgeschwindigkeit und die Strömungsrichtung des sich im freien Innenraumbereich 32a bzw. 82a in der Nähe der Katalysatormittel-Innenfläche 25a bzw. 75a befindenden Abgases bei einer konstanten, pro Zeiteinheit durch den Katalysator strömenden Abgasmenge bei der ganzen Katalysatormittel-Innenfläche und insbesondere entlang der ganzen axialen Ausdehnung von dieser annähernd konstant sind. Dementsprechend ist auch die Strömungsgeschwindigkeit und Stromdichte bei der ganzen Innenfläche 21a bzw. 71a des Katalysator-Körpers 21 bzw. 71 annähernd konstant. Analoges gilt für die Strömung im Innern des Katalysator-Körpers bei einer sich in diesem befindenden, zur Innenfläche 21a bzw. 71a parallelen Schnittfläche. Gemäss den Berechnungen ist es insbesondere günstig, wenn die Querschnittsfläche des freien Innenraumbereichs entlang der Achse vom Einlass weg linear abnimmt, wie es beim freien Innenraumbereich 32a der Fall ist.

Die Untersuchungen und numerischen Strömungsrechnungen haben ferner gezeigt, dass die Strömung bei den beim Betrieb auftretenden Strömungsmengen im Einlass-Innenraum 31 bzw. 81, im Katalysatormittel-Innenraum 32 bzw. 82, im äusseren Hohlraum 34 bzw. 84 und im Auslass-Innenraum 35 bzw. 85 mindestens annähernd turbulenzfrei ist, so dass in diesen Räumen praktisch keine Wirbel und insbesondere keine grossen Wirbel entstehen. Dies trägt zusammen mit der gleichmässigen Stromdichte des Abgases im Katalysator-Körper dazu bei, den Strömungswiderstand und Druckverlust klein zu halten.

Die kleine Bemessung der Wellenhöhe und Wellenlänge der Wellen 92a, 93a, 102a gewährleistet einen intensiven Kontakt des die Durchgänge eines Katalysator-Körpers durchströmenden Abgases mit dem katalytisch aktiven Material. Dies ermöglicht, die Durchgänge relativ kurz und das Volumen eines Katalysator-Körpers im Vergleich zu der pro Zeiteinheit zu behandelnden Abgasmenge relativ klein zu bemessen, was den Platz- sowie Materialbedarf und die Herstellungskosten eines Katalysator-Körpers klein hält.

Das Abgas gelangt beim Einströmen in den Katalysator 1 bzw. 51 aus dem Einlass 10 bzw. 60 direkt und ohne Kontakt mit dem Mantel und den Endwänden des Gehäuses 3 bzw. 53 in den Katalysatormittel-Innenraum 32 bzw. 82. Das Abgas gibt daher vor dem Einströmen in die Katalysatormittel nur wenig Wärme an die Umgebung ab. Bei einem Kalt-Start des Katalysators 1 oder 51 - d.h. wenn dieser beim Beginn der Zufuhr von Abgas noch ungefähr Umgebungstemperatur aufweist - erhitzt das heisse Abgas den Katalysator-Körper 21 bzw. 71 daher rasch auf die für eine effiziente, katalytische Behandlung des Abgases nötige Temperatur.

Die sich stromaufwärts von den Katalysatormitteln 20 und 70 befindenden Innenräume 31, 32 bzw. 81, 82 der Katalysatoren 1 und 51 sind vollständig gasdicht gegen die Umgebung abgeschlossen, so dass das ganze dem Einlass 10 bzw. 60 zugeführte Abgas zu den Katalysatormitteln gelangt und das Abgas in diesen Innenräumen die gleiche Zusammensetzung hat wie beim Ausströmen aus dem Auslass der Motors. Die Bördel- und/oder Falzverbindungen 7, 8, 9 des Katalysators 1 und die entsprechenden Verbindungen des Katalysators 51 sind kostengünstiger herstellbar als Schweissverbindungen und tragen daher dazu bei, die Herstellungskosten niedrig zu halten. Die Bördel- und/oder Falzverbindungen sind zwar möglicherweise nicht ganz vollkommen, sondern nur einigermassen gasdicht. Weil sie nur an den sich stromabwärts von den Katalysatormitteln 20 bzw. 70 befindenden, äusseren Hohlraum 34 bzw. 84 angrenzen, stört ein möglicherweise bei dem Bördel- und/oder Falzverbindungen auftretendes, kleines Leck nicht.

Die Katalysatoren können in verschiedener Weise geändert werden. Man kann insbesondere Merkmale der beiden Katalysatoren 1 und 51 miteinander kombinieren. Das Begrenzungs- und/oder Leitelement 33 kann zum Beispiel statt paraboloidförmig im wesentlichen kegelförmig ausgebildet werden, wobei das Ende 33b spitz oder im Axialschnitt abgerundet sein kann. Umgekehrt kann das Begrenzungs- und/oder Leitelement 83 mindestens in dem durch das längere und/oder in dem durch die kürzere Oval-Hauptachse verlaufenden Axialschnitt und beispielsweise in allen Axialschnitten im wesentlichen parabelförmig sein.

Des weiteren kann man die Bördel- und/oder Falzverbindungen des Gehäuses durch Schweissverbindungen ersetzen. Ferner kann man die Endwand 6 und 56 weglassen und dafür den Übergangsabschnitt 11b bzw. 61b des Auslasses 11 bzw. 61 an dessen sich näher beim Mantel 4 bzw. 54 befindenden Ende derart erweitern, dass er direkt mit dem Mantel 4 bzw. 54 verbunden werden kann. Der Mantel 4 bzw. 54 kann dann zudem derart verkürzt werden, dass er ungefähr in der vom Halteorgan 26 bzw. 76 definierten Ebene mit dem Übergangsabschnitt des Auslasses verbunden ist. Eventuell kann der Mantel und die eine Endwand oder der Mantel und der Auslass sogar aus einem einstückigen Körper bestehen.

Die Halteorgane 26, 76 könnten statt aus einem kompakten Plättchen aus einer ringförmigen Scheibe bestehen, die bei ihrem Innenrand mit dem Begrenzungs- und/oder Leitelement 33 bzw. 83 verschweisst ist. Des weiteren kann man zwischen der Endwand 5 bzw. 55 und dem Katalysator-Körper 21 bzw. 71 noch eine ringförmige, wärmeisolierende und/oder in axialer Richtung etwas federnde Zwischenlage anordnen. Stattdessen könnte man an der Hülse 25 bzw. 75 in kleinem Abstand von der Endwand 5 bzw. 55 einen Ring befestigen, etwa anschweissen und den Katalysator-Körper 21 bzw. 71 zwischen diesem Ring und dem Halteorgan 26 bzw. 76 anordnen, so dass zwischen der Endwand 5 bzw. 55 und dem Katalysator-Körper ein ringförmiger, freier, d.h. beim Betrieb nur Abgas enthaltender, zur Wärmeisolation dienender Spalt vorhanden ist.

Ferner kann anstelle einer sich innerhalb eines Katalysator-Körpers 21, 71 befindenden Hülse 25 bzw. 75 oder zusätzlich zu einer solchen eine den Katalysator-Körper umschliessende, perforierte Hülse vorhanden sein.

## Patentansprüche

1. Katalysator für die katalytische Behandlung von Abgas, insbesondere von Abgas eines Verbrennungsmotors, mit einer Achse (2, 52), einem Gehäuse (3, 53) und in diesem angeordneten Katalysatormitteln (20, 70), wobei das Gehäuse (3, 53) einen die Achse (2, 52) umschliessenden Mantel (4, 54), einen mit einem Innenraum (32, 82) verbundenen Einlass (10, 60) und einen Auslass (11, 61) besitzt, wobei die Katalysatormittel (20, 70) eine an den Innenraum (32, 82) angrenzende Innenfläche (25a, 75a), eine dem Mantel (4, 54) zugewandte Aussenfläche (21b, 71b) und von der Innenfläche (25a, 75a) zur Aussenfläche (21b, 71b) verlaufende Durchgänge (22, 25c, 72, 75c, 94, 104) haben und wobei zwischen dem Mantel (4, 54) und der Aussenfläche (21b, 71b) der Katalysatormittel (20, 70) ein äusserer Hohlraum (34, 84) vorhanden ist, dadurch gekennzeichnet, dass ein sich mindestens zum Teil im Innenraum (32, 82) befindendes Begrenzungselement (33, 83) mit einer Begrenzungsfläche (33a, 83a) vorhanden ist, die zusammen mit der Innenfläche (25a, 75a) der Katalysatormittel (20, 70) einen freien Innenraumbereich (32a, 82a) begrenzt und sich mindestens in einem Teil des Innenraums (32, 82) vom Einlass (10, 60) weg an die Innenfläche (25a, 75a) der Katalysatormittel (20, 70) annähert, so dass die Querschnittsfläche des freien Innenraumbereichs (32a, 82a) mindestens im genanntem Teil des letzteren vom Einlass (10, 60) weg abnimmt.

2. Katalysator nach Anspruch 1, dadurch gekennzeichnet, dass die Innenfläche (25a, 75a) der Katalysatormittel (20, 70) im wesentlichen parallel zur Achse (2, 52) ist.

3. Katalysator nach Anspruch 1 oder 2, dadurch gekennzeichnet, dass sich das Begrenzungselement (33, 83) im wesentlichen entlang der ganzen axialen Abmessung der Innenfläche (25a, 75a) der Katalysatormittel (20, 70) erstreckt und dass die Begrenzungsfläche (33a, 83a) im wesentlichen entlang der ganzen axialen Abmessung der Innenfläche (25a, 75a) der Katalysatormittel (20, 70) in vom Einlass (10, 60) weg verlaufender Richtung von der Achse (2, 52) weg nach aussen geneigt ist, so dass die Querschnittsfläche des freien Innenraumbereichs (32a, 82a) im wesentlichen entlang der ganzen axialen Ausdehnung der Innenfläche (25a, 75a) der Katalysatormittel (20, 70) abnimmt.

4. Katalysator nach Anspruch 3, dadurch gekennzeichnet, dass die Begrenzungsfläche (33a, 83a) an einem sich näher beim Einlass (10, 60) befindenden Ende (33b, 83b) des Begrenzungselements (33, 83) in mindestens einem Axialschnitt gebogen ist und stetig mit einem der Innenfläche (25a, 75a) der Katalysatormittel (20, 70) zugewandten Bereich der Begrenzungsfläche (33a, 83a) zusammenhängt.

5. Katalysator nach einem der Ansprüche 1 bis 4, dadurch gekennzeichnet, dass im wesentlichen die ganze Begrenzungsfläche (33a) in mindestens einem Axialschnitt stetig gebogen ist.

6. Katalysator nach einem der Ansprüche 1 bis 5, dadurch gekennzeichnet, dass die Begrenzungsfläche (33a) in mindestens einem Axialschnitt im wesentlichen parabelförmig ist.

7. Katalysator nach einem der Ansprüche 1 bis 6, dadurch gekennzeichnet, dass die Begrenzungsfläche (33a) in allen Axialschnitten im wesentlichen parabelförmig ist.

8. Katalysator nach einem der Ansprüche 1 bis 7, dadurch gekennzeichnet, dass die Begrenzungsfläche (33a, 83a) bei einem dem Einlass (10, 60) abgewandten Ende der Innenfläche (25a, 75a) der Katalysatormittel (20, 70) die Innenfläche (25a, 75a) der Katalysatormittel (20, 70) berührt oder von dieser Innenfläche (25a, 75a) einen Abstand hat, der höchstens 5% der maximalen Querschnittsabmessung des Innenraums (32, 82) ist.

9. Katalysator nach einem der Ansprüche 1 bis 8, dadurch gekennzeichnet, dass die Innenfläche (25a, 75a) der Katalysatormittel (20, 70) und der freie Innenraumbereich (32a, 82a) in einem zur Achse (2, 52) rechtwinkligen Querschnitt ringförmig sind und das Begrenzungselement (33, 83) umschliessen.

10. Katalysator nach einem der Ansprüche 1 bis 9, dadurch gekennzeichnet, dass die Aussenfläche (21b, 71b) in einem Abstand von der Innenfläche (21a, 71a) der Katalysatormittel (20, 70) steht und dass die parallel zur Achse (2, 52) gemessene Länge der Katalysatormittel (20, 70) mindestens zweimal grösser als der Abstand der Aussenfläche (21b, 71b) von der Innenfläche (21a, 71a) der Katalysatormittel (20, 70) ist.

11. Katalysator nach einem der Ansprüche 1 bis 10, dadurch gekennzeichnet, dass die Katalysatormittel (20, 70) ein Paket von Blechelementen (92, 93, 102, 103) aufweisen, von denen mindestens jedes zweite Wellen (92a, 93a, 102a) besitzt, und dass die einander benachbarten Blechelemente (92, 93, 102, 103) zusammen mindestens wesentliche Teile der Durchgänge (22c, 25c, 72, 75c, 94, 104) für das Abgas begrenzen und an diese angrenzende, mit katalytisch aktivem Material versehene Flächen aufweisen.

12. Katalysator nach Anspruch 11, dadurch gekennzeichnet, dass die einander benachbarten Blechelemente (92, 93, 102, 103) einander bei Wellenscheiteln (92b, 93b, 102b) der Wellen (92a, 93a, 102a) berühren und dass die Wellenscheitel (92b, 93b, 102b) in zur Achse (2, 52) rechtwinkligen Ebenen liegen, so dass die Durchgänge (22c, 25c, 72, 75c, 94, 104) im wesentlichen entlang von solchen Ebenen verlaufen.

13. Katalysator nach einem der Ansprüche 1 bis 12, dadurch gekennzeichnet, dass die Querschnittsfläche des freien Innenraumbereichs (32a, 82a) im wesentlichen entlang der ganzen axialen Ausdehnung der Innenfläche (25a, 75a) der Katalysatormittel (20, 70) in vom Einlass (10, 60) weg verlaufender Richtung linear abnimmt.

14. Katalysator nach einem der Ansprüche 1 bis 12, dadurch gekennzeichnet, dass das Gehäuse (3; 53) an einem Ende des Mantels (4, 54) eine Endwand (5, 55) mit einem zentralen Loch (5a, 55a) hat und dass der Einlass (10, 60) einen Stutzen hat, der durch das Loch (5a, 55a) der Endwand (5, 55) hindurch dicht mit den Katalysatormitteln (20, 70) verbunden ist.

15. Katalysator nach Anspruch 14, dadurch gekennzeichnet, dass der Mantel (4, 54) aus einem Blechteil besteht, dass die Endwand (5, 55) aus einem Blechteil besteht und dass der den Mantel (4, 54) bildende Blechteil von einem zum anderen Ende des Mantels (4, 54) verlaufende, durch eine Bördel-Verbindung (7) miteinander verbundene Ränder hat und/oder durch eine Bördel-Verbindung (8) mit dem die Endwand (5, 55) bildenden Blechteil verbunden ist.

## Claims

1. Catalytic converter for the catalytic treatment of exhaust gas, in particular of exhaust gas from an internal combustion engine, having an axis (2, 52), a housing (3, 53) and catalyst means (20, 70) arranged therein, the housing (3, 53) having a lateral wall (4, 54) surrounding the axis (2, 52), an inlet (10, 60) connected to an inner space (32, 82), and an outlet (11, 61), the catalyst means (20, 70) having an inner surface (25a, 75a) bordering the inner space (32, 82), an outer surface (21b, 71b) facing the lateral wall (4, 54) and passages (22, 25c, 72, 75c, 94, 104) running from the inner surface (25a, 75a) to the outer surface (21b, 72b), and an outer cavity (34, 84) being present between the lateral wall (4, 54) and the outer surface (21b, 71b) of the catalyst means (20, 70), characterised in that a limiting member (33, 83) which is located at least partly in the inner space (32, 82) and has a limiting surface (33a, 83a) is present, which limiting surface together with the inner surface (25a, 75a) of the catalyst means (20, 70) borders a free inner space region (32a, 82a) and approaches the inner surface (25a, 75a) of the catalyst means (20, 70) at least in a part of the inner space (32, 82) away from the inlet (10, 60), so that the cross-sectional area of the free inner space region (32a, 82a) decreases away from the inlet (10, 60) at least in the stated part of said region.

2. Catalytic converter according to claim 1, characterised in that the inner surface (25a, 75a) of the catalyst means (20, 70) is substantially parallel to the axis (2, 52).

3. Catalytic converter according to claim 1 or 2, characterised in that the limiting member (33, 83) extends substantially along the entire axial dimension of the inner surface (25a, 75a) of the catalyst means (20, 70) and that the limiting surface (33a, 83a) is inclined outward away from the axis (2, 52) in the direction away from the inlet (10, 60) substantially along the entire axial dimension of the inner surface (25a, 75a) of the catalyst means (20, 70), so that the cross-sectional area of the free inner space region (32a, 82a) decreases substantially along the entire axial extent of the inner surface (25a, 75a) of the catalyst means (20, 70).

4. Catalytic converter according to claim 3, characterised in that the limiting surface (33a, 83a) is curved in at least one axial section at an end (33b, 83b) of the limiting member (33, 83) disposed closer to the inlet (10, 60) and is continuously cohesive with a region of the limiting surface (33a, 83a) which faces the inner surface (25a, 75a) of the catalyst means (20, 70).

5. Catalytic converter according to one of claims 1 to 4, characterised in that substantially the entire limiting surface (33a) is continuously curved in at least one axial section.

6. Catalytic converter according to one of claims 1 to 5, characterised in that the limiting surface (33a) is substantially parabolic in at least one axial section.

7. Catalytic converter according to one of claims 1 to 6, characterised in that the limiting surface (33a) is substantially parabolic in all axial sections.

8. Catalytic converter according to any of claims 1 to 7, characterised in that, at an end of the inner surface (25a, 75a) of the catalyst means (20, 70) which is remote from the inlet (10, 60), the limiting surface (33a, 83a) is in contact with the inner surface (25a, 75a) of the catalyst means (20, 70) or has a spacing from this inner surface (25a, 75a) which is at most 5% of the maximum cross-sectional dimension of the inner space (32, 82).

9. Catalytic converter according to any of claims 1 to 8, characterised in that the inner surface (25a, 75a) of the catalyst means (20, 70) and the free inner space region (32a, 82a) are annular in a cross-section at right angles to the axis (2, 52) and surround the limiting member (33, 83).

10. Catalytic converter according to any of claims 1 to 9, characterised in that the outer surface (21b, 71b) stands at a spacing from the inner surface (21a, 71a) of the catalyst means (20, 70) and that the length of the catalyst means (20, 70) as measured parallel to the axis (2, 52) is at least twice as large as the spacing of the outer surface (21b, 71b) from the inner surface (21a, 71a) of the catalyst means (20, 70).

11. Catalytic converter according to any of claims 1 to 10, characterised in that the catalyst means (20, 70) have a packet of sheet metal members (92, 93, 102, 103), of which at least every second one has waves (92a, 93a, 102a), and that the sheet metal members (92, 93, 102, 103) which are adjacent to one another together bound at least substantial parts of the passages (22c, 25c, 75, 75c, 94, 104) for the exhaust gas and have surfaces which are adjacent to the passages and provided with catalytically active material.

12. Catalytic converter according to claim 11, characterised in that the sheet metal members (92, 93, 102, 103) which are adjacent to one another contact each other at wave crests (92b, 93b, 102b) of the waves (92a, 93a, 102a) and that the wave crests (92b, 93b, 102b) lie in planes at right angles to the axis (2, 52), so that the passages (22c, 25c, 72, 75c, 94, 104) extend substantially along such planes.

13. Catalytic converter according to one of claims 1 to 12, characterised in that the cross-sectional area of the free inner space region (32a, 82a) decreases substantially along the entire axial extent of the inner surface (25a, 75a) of the catalyst means (20, 70) in direction extending away from the inlet (10, 60).

14. Catalytic converter according to one of claims 1 to 12, characterised in that the housing (3, 53) has an end wall (5, 55) with a central hole (5a, 55a) at one end of the lateral wall (4, 54) and that the inlet (10, 60) has a connection piece which is tightly connected to the catalyst means (20, 70) through the hole (5a, 55a) of the end wall (5, 55).

15. Catalytic converter according to claim 14, characterised in that the lateral wall (4, 54) consists of a sheet metal part, that the end wall (5, 55) consists of a sheet metal part and that the sheet metal part forming the lateral wall (4, 54) has edges running from one end of the lateral wall (4, 54) to the other and connected to one another by a flange joint and/or is connected to the sheet metal part forming the end wall (5, 55) by means of a flange joint.

## Revendications

1. Catalyseur pour le traitement catalytique de gaz d'échappement, en particulier des gaz d'échappement d'un moteur à combustion interne, comportant un axe (2, 52), un boîtier (3, 53) et des moyens catalytiques (20, 70) agencés dans celui-ci, dans lequel le boîtier (3, 53) possède une enveloppe (4, 54) entourant l'axe (2, 52), une entrée (10, 60) reliée à une chambre intérieure (32, 82) et une sortie (11, 61), et dans lequel les moyens catalytiques (20, 70) présentent une surface intérieure (25a, 75a) adjacente à la chambre intérieure (32, 82), une surface extérieure (21b, 71b) orientée vers l'enveloppe (4, 54) et des passages (22, 25c, 72, 75c, 94, 104) s'étendant depuis la surface intérieure (25a, 75a) jusqu'à la surface extérieure (21b, 71b), et dans lequel une cavité extérieure (34, 84) est prévue entre l'enveloppe (4, 54) et la surface extérieure (21b, 71b) des moyens catalytiques (20, 70), caractérisé en ce qu'il est prévu un élément de délimitation (33, 83) situé au moins en partie dans la chambre intérieure (32, 82) et présentant une surface de délimitation (33a, 83a) qui délimite conjointement avec la surface intérieure (25a, 75a) des moyens catalytiques (20, 70) une région libre (32a, 82a) de la chambre intérieure et qui se rapproche de la surface intérieure (25a, 75a) des moyens catalytiques (20, 70) au moins dans une partie de la chambre intérieure (32, 82) en éloignement de l'entrée (10, 60), de sorte que la surface de section transversale de la région libre (32a, 82a) de la chambre intérieure diminue au moins dans ladite partie de cette région en éloignement de l'entrée (10, 60).

2. Catalyseur selon la revendication 1, caractérisé en ce que la surface intérieure (25a, 75a) des moyens catalytiques (20, 70) est sensiblement parallèle à l'axe (2, 52).

3. Catalyseur selon l'une ou l'autre des revendications 1 et 2, caractérisé en ce que l'élément de délimitation (33, 83) s'étend sensiblement le long de toute la dimension axiale de la surface intérieure (25a, 75a) des moyens catalytiques (20, 70), et en ce que la surface de délimitation (33a, 83a) est inclinée en éloignement de l'axe (2, 52) vers l'extérieur sensiblement le long de toute la dimension axiale de la surface intérieure (25a, 75a) des moyens catalytiques (20, 70), dans la direction qui va en s'éloignant de l'entrée (10, 60), de sorte que la surface de section transversale de la région libre (32a, 82a) de la chambre intérieure diminue sensiblement le long de toute l'extension axiale de la surface intérieure (25a, 75a) des moyens catalytiques (20, 70).

4. Catalyseur selon la revendication 3, caractérisé en ce que, à une extrémité (33b, 83b) de l'élément de délimitation (33, 83), située près de l'entrée (10, 60), la surface de délimitation (33a, 83a) est incurvée au moins suivant une coupe axiale et en ce qu'elle est reliée constamment à une région de la surface de délimitation (33a, 83a) qui est orientée vers la surface intérieure (25a, 75a) des moyens catalytiques (20, 70).

5. Catalyseur selon l'une quelconque des revendications 1 à 4, caractérisé en ce que sensiblement toute la surface de délimitation (33a) est incurvée constamment au moins suivant une coupe axiale.

6. Catalyseur selon l'une quelconque des revendications 1 à 5, caractérisé en ce que la surface de délimitation (33a) est de forme sensiblement parabolique au moins suivant une coupe axiale.

7. Catalyseur selon l'une quelconque des revendications 1 à 6, caractérisé en ce que la surface de délimitation (33a) est de forme sensiblement parabolique suivant toutes les coupes axiales.

8. Catalyseur selon l'une quelconque des revendications 1 à 7, caractérisé en ce que la surface de délimitation (33a, 83a) touche la surface intérieure (25a, 75a) des moyens catalytiques (20, 70) à une extrémité de la surface intérieure (25a, 75a) des moyens catalytiques (20, 70), qui est détournée de l'entrée (10, 60), ou bien présente une distance par rapport à cette surface intérieure (25a, 75a) qui est tout au plus 5% de la dimension maximale en section transversale de la chambre intérieure (32, 82).

9. Catalyseur selon l'une quelconque des revendications 1 à 8, caractérisé en ce que la surface intérieure (25a, 75a) des moyens catalytiques (20, 70) et la région libre (32a, 82a) de la chambre intérieure sont annulaires suivant une section transversale perpendiculaire à l'axe (2, 52) et entourent l'élément de délimitation (33, 83).

10. Catalyseur selon l'une quelconque des revendications 1 à 9, caractérisé en ce que la surface extérieure (21b, 71b) est à distance par rapport à la surface intérieure (21a, 71a) des moyens catalytiques (20, 70), et en ce que la longueur des moyens catalytiques (20, 70), mesurée parallèlement à l'axe (2, 52), s'élève au moins à deux fois la distance de la surface extérieure (21b, 71b) par rapport à la surface intérieure (21a, 71a) des moyens catalytiques (20, 70).

11. Catalyseur selon l'une quelconque des revendications 1 à 10, caractérisé en ce que les moyens catalytiques (20, 70) présentent un empilement d'éléments en tôle (92, 93, 102, 103), dont au moins un sur deux possède des ondulations (92a, 93a, 102a), et en ce que les éléments en tôle (92, 93, 102, 103) voisins les uns des autres délimitent conjointement au moins des parties essentielles des passages (22c, 25c, 72, 75c, 94, 104) pour les gaz d'échappement et présentent des surfaces adjacentes à celles-ci et pourvues d'une matière active sur le plan catalytique.

12. Catalyseur selon la revendication 11, caractérisé en ce que les éléments en tôle (92, 93, 102, 103) voisins les uns des autres se touchent au niveau des sommets d'ondulations (92b, 93b, 102b) des ondulations (92a, 93a, 102a), et en ce que les sommets d'ondulations (92b, 93b, 102b) se trouvent dans des plans perpendiculaires à l'axe (2, 52), de sorte que les passages (22c, 25c, 72, 75c, 94, 104) s'étendent sensiblement le long de tels plans.

13. Catalyseur selon l'une quelconque des revendications 1 à 12, caractérisé en ce que la surface de section transversale de la région libre (32a, 82a) de la chambre intérieure diminue linéairement sensiblement le long de toute l'extension axiale de la surface intérieure (25a, 75a) des moyens catalytiques, dans une direction qui va en s'éloignant de l'entrée (10, 60).

14. Catalyseur selon l'une quelconque des revendications 1 à 12, caractérisé en ce que le boîtier (3, 53) possède à une extrémité de l'enveloppe (4, 54) une paroi d'extrémité (5, 55) présentant un trou central (5a, 55a), et en ce que l'entrée (10, 60) possède un manchon qui est relié de façon étanche à travers le trou (5a, 55a) de la paroi d'extrémité (5, 55) aux moyens catalytiques (20, 70).

15. Catalyseur selon la revendication 14, caractérisé en ce que l'enveloppe (4, 54) est constituée par une pièce en tôle, en ce que la paroi d'extrémité (5, 55) est constituée par une pièce en tôle, et en ce que la partie en tôle formant l'enveloppe (4, 54) possède des bordures s'étendant depuis l'une des extrémités de l'enveloppe (4, 54) jusqu'à l'autre et reliées les unes aux autres par une liaison à sertissage (7), et/ou en ce qu'elle est reliée via une liaison à sertissage (8) à la partie en tôle formant la paroi d'extrémité (5, 55).
